Europäisches Patentamt

(19) European Patent Office  (11) Publication number: **0 162 402**

Office européen des brevets  **B1**

(12) **EUROPEAN PATENT SPECIFICATION**

(45) Date of publication of patent specification: **11.04.90**  (51) Int. Cl.⁵: **B 27 G 5/02**

(21) Application number: **85105889.1**

(22) Date of filing: **13.05.85**

(54) Apparatus for locating a workpiece.

(30) Priority: **22.05.84 GB 8413014**

(43) Date of publication of application:
**27.11.85 Bulletin 85/48**

(45) Publication of the grant of the patent:
**11.04.90 Bulletin 90/15**

(84) Designated Contracting States:
**AT BE CH DE FR GB IT LI LU NL SE**

(56) References cited:
**DE-C- 49 142**
**GB-A-1 358 251**
**GB-A-1 420 066**
**US-A-2 748 811**

(73) Proprietor: **Gripperrods International plc**
**Blatchford Road**
**Horsham, Sussex RH13 5QQ (GB)**

(72) Inventor: **Adams, Sidney James**
**24 Chatsworth Avenue**
**Hendon London NW4 1HT (GB)**
Inventor: **Grimes, David Kenneth**
**41 Kneller Road**
**Twickenham Middlesex TW2 DF (GB)**

(74) Representative: **Brooke-Smith, Fred et al**
**STEVENS, HEWLETT & PERKINS 5 Quality Court**
**Chancery Lane**
**London WC2A 1HZ (GB)**

Courier Press, Leamington Spa, England.

## Description

The present invention relates to an apparatus for locating a workpiece for sawing, and more particularly for locating a workpiece to be cut at a chosen angle and at a chosen position along its length.

Devices for locating an elongated workpiece at a chosen angle are already known such as those disclosed in U.K. Patent No. 1358251. Commonly, such a device is used for making picture frames in which case cuts of 45° are frequently required. In making picture frames it is often convenient to make a feathered cut, that is a cut in which the saw scarf touches a corner of a workpiece that has previously been cut to a desired length, and an example of an apparatus which allows a 45° feather cut to be made is disclosed in U.K. Patent No. 1420066 in which a corner of the workpiece is located between two dowels, which flank a guide plane, for a saw on opposite sides. U.K. Patent No. 1420066 discloses an apparatus which comprises for the purpose a base on which the workpiece can be placed, a saw guide defining a saw guide plane a workpiece guide means providing a guide plane for a face of the workpiece mounted on the base and an abutment situated in a region close to the saw guide plane for engagement with an end of a workpiece located by the workpiece guide.

According to the present invention such a location apparatus is characterised in that the workpiece guide means comprises a member selectively adjustable into either of the two positions in which it defines two guide planes respectively, said guide planes being parallel to each other, and in one of which positions the guide plane defined by the member offset from the abutment so that the member locates the workpiece clear of the abutment.

In a preferred embodiment, the workpiece guide is adjustable between the alternative positions by reversal of its ends.

The workpiece guide may take the form of a fence removably located on the base by pegs in holes and/or slots. A suitable way of allowing the angle of the fence to be adjusted is by locating one of the pegs in a hole about which the fence is pivotable. Another peg can then slide in a slot in the base and this, or a further peg, can be used to lock the fence in any desired position.

In a preferred embodiment the base is provided with two sets of holes and/or slots for locating the workpiece guide. The two sets are symmetrically arranged, the axis of symmetry preferably being perpendicular to the saw guide plane.

Preferably, the saw guide plane comprises at least one pair of rollers rotatably mounted on parallel axes between which the saw guide plane passes, at least one of the rollers being raised above the base with a boss or other protuberance below it forming a locating abutment for a face of the workpiece, for fixing the workpiece close to the at least one roller but spaced therefrom.

A specific embodiment of the invention will now be described in detail with reference to the accompanying drawings, in which:

Figure 1 is a plan view of a location apparatus, with a fragmented view of a workpiece in position on the apparatus; and

Figure 2 is a section along the line T—T of figure 1.

The location apparatus according to the invention has a base 1 on which is mounted an adjustable fence 12 for locating a workpiece W which is to be cut by a saw guided by two pairs of rollers 9.

The base 1 provides a platform 2 resting on a peripheral flange 3, the sides of which have cut-away portions 4. A vertical hole 5 extends through the base 1 at each corner thereof, into which can be inserted bench stops (not shown) to position the apparatus on a work top.

The rollers 9 are mounted on bosses 6 projecting from the platform 2, the rollers 9 of each pair being separated by a gap 8 whose width is approximately equal to the thickness of a typical sawblade (not shown). The gaps 8 together define a plane within which movement of the blade is restricted when it is inserted between the rollers 9 of each pair. As can be seen from the drawings, the circular bosses 6 are concentric with the rollers 9 to project radially beyond the periphery of the rollers except at the gap between the rollers where flat ledges on the bosses maintain the width of the gap and thereby allow the saw blade to pass between the bosses.

Each roller 9 comprises a tube rotatably mounted on a fixed pillar 10 which has an increased diameter portion 9 at its upper end to prevent the tube from being lifted relative to the pillar. Each pillar 10 is secured to the platform 2 by a nut 11 located underneath the boss, and is of slightly smaller diameter than the boss.

The fence 12 for locating the workpiece on the platform has an interrupted side wall 12a and an opposite side wall 12b each providing a locating face for a side face of a workpiece (not shown).

Downwardly projecting pegs 13, 14 at each end of the fence, offset towards the side face 12a, and an intermediate locking screw 15 adjustably locate the fence on the platform using either of two sets of apertures in the platform, each set comprising a circular hole 16 and two slots 17, 18 concentric with the hole. The angular orientation of the fence 12 can be adjusted by pivoting the fence on the peg 13 in the hole 16, the other peg 14 and the screw 15 sliding in their respective slots 17, 18.

The slot 18 has a T-shaped cross-section in order to locate a nut (not shown) beneath the platform 2, which is threaded onto the locking screw 15. The locking screw can then be twisted onto the nut to fix the fence in a chosen position. It is alternatively possible to dispose a locking screw below the platform with its engaging nut above the platform.

The two sets of apertures 16, 17, 18 are disposed symmetrically with respect to a line perpendicular to the saw guide plane and midway between the pairs of rollers 9. The hole 16 in each set of apertures is adjacent to the pair of rollers 9 associated with that set.

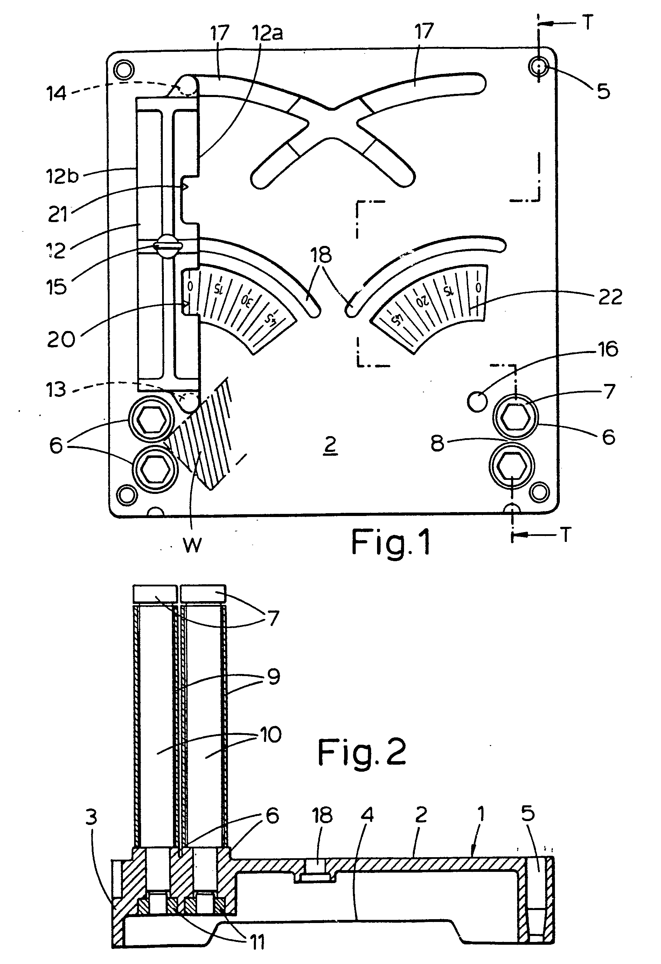

Figure 1 shows the fence 12 located with the peg 13 in the hole 16 and the peg 14 in the slot 17; in this configuration, the side 12a of the fence faces the middle region of the platform 2 and provides the workpiece guide plane. The locking screw 15 is located equidistant from the pegs 13, 14 so that the fence 12 may equally be positioned with its ends reversed. In this alternative configuration, the side 12b will then face the middle of the platform 2 and will provide a workpiece guide plane which, for any given angular orientation of the fence, is located nearer the centre of the platform.

The fence 12 is provided with two pointers 20, 21 and the platform 2 is provided with a scale 22 adjacent to each slot 18, for indicating the angle between the workpiece guide plane and the saw guide plane.

Depending on the configuration, one or other of the pointers 20, 21, will provide a reading on the associated scale 22. The scale may be used in either configuration because the pointers 20, 21 both lie on the line joining the centres of the pegs 13, 14, parallel to the fence sides.

In order to make a cut at the required angle at any arbitrary point along the length of the workpiece W, the fence is ositioned with its peg 14 in one of the holes 16 and locked in position by tightening the locking screw 15 by hand. The pointer 21 indicates on the scale 22 the angle of cut, which may be from 0° to 45°. The side 12b of the fence then provides the location face, which over this range of adjustment defines a space for the workpiece clear of the adjacent pair of saw guide rollers. Because the workpiece is sufficiently displaced laterally from these rollers, it can project past them to bring the location for the cut into the saw guide plane. The workpiece is cut by a saw guided by the rollers 9 which rotate about the pillars 10 as the saw moves. In order to make a feathered cut of 45°, at the squared end of the workpiece, for example the workpiece being first cut with the scale pointer at 0°, the fence 12 is positioned with the peg 13 in one of the two holes 16, e.g. as shown in Figure 1, and pivoted to the 45° position. The workpiece W is located by its side face against the wall 12a and by its end face against the further of the two bosses 6. The workpiece is thus fixed lengthwise by abutment of its end face against a boss 6 with the result that it is appropriately positioned for a feathered cut, but does not contact the rollers so that they can still rotate freely.

This configuration may also be used for making cuts of angles other than 45° but the saw cut will not of course pass exactly through the end edge when the workpiece is at an angle such that its end face abuts a boss.

For all the above-described methods of using this embodiment of the invention, the fence may be positioned using either of the sets of apertures and, accordingly, locating the workpiece close to or against either of the pairs of rollers. The provision of the two alternative configurations firstly allows an angled cut to be made in either sense relative to a side face of the workpiece, which is useful for cutting picture frame mouldings, for example, that can only be located securely by one of their side faces, and. also makes the apparatus equally convenient for right- or left-handed use.

## Claims

1. A location apparatus for use in making a saw cut in a workpiece comprising a base on which the workpiece can be placed, a saw guide defining a saw guide plane, a workpiece guide means providing a guide plane for a face of the workpiece mounted on the base and an abutment situated in a region close to the saw guide plane for engagement with an end of a workpiece located by the workpiece guide, characterised in that the workpiece guide means comprises a member (12) selectively adjustable into either of the two positions in which it defines two guide planes respectively, said guide planes being parallel to each other, and in one of which positions the guide plane defined by the member (12) is offset from the abutment (6) so that the member (12) locates the workpiece clear of the abutment (6).

2. Apparatus according to claim 1, characterised in that the workpiece guide (12) is adjustable between the alternative positions by reversal of its ends (13, 14).

3. Apparatus according to claim 1 or claim 2 characterised in that the workpiece guides (12) is in the form of a fence (12) located on the base (1) and removable therefrom to adjust it between the alternative positions.

4. Apparatus according to claim 3 characterised in that the fence (12) is pivotable through a peg (13, 14) located in a hole (16) in the base.

5. Apparatus according to claim 4 characterised in that respective peg (13, 14) and hole (16) locations are provided for opposite ends of the fence (12) for locating the fence (12) in the alternative positions.

6. Apparatus according to claim 5 characterised in that pegs (13, 14) are provided at opposite ends of the fence (12) one to be received in a hole (16) in the base (1) for pivoting location of the fence (12) and the other in an arcuate slot (17) in the base (1) concentric with the hole (16).

7. Apparatus according to claim 6, characterised in that a scale of angles of the fence centred on said hole (16) is marked on the base and in that co-operating pointer means (20, 21) is provided on the fence on a line joining the centres of the two pegs (13, 14).

8. Apparatus according to any of the preceding claims characterised in that the base (1) is provided with two alternative sets of holes (16) and/ or slots (17, 18) for locating the workpiece guide (12).

9. Apparatus according to claim 8 wherein the two sets of holes (16) and slots (17, 18) are disposed symmetrically with respect to the axis perpendicular to the saw guide plane.

## Patentansprüche

1. Positioniereinrichtung zur Verwendung bei der Herstellung eines Sägeschnittes in einem Werkstück mit einer Basis, auf der das Werkstück angeordnet werden kann, eine Sägeführung, die eine Sägeführungsebene begrenzt, eine Werkstückführung, die eine Führungsebene für eine Fläche des auf der Basis angeordneten Werkstückes bildet, und einem Anschlag, der in einem Bereich nahe des Sägeführungsebene angeordnet ist, um mit einem Ende eines Arbeitsstückes in Eingriff zu treten, das durch die Werkstückführung gehalten wird, dadurch gekennzeichnet, daß die Werkstückführung einen Teil (12) aufweist, der wahlweise in eine von zwei Lagen einstellbar ist, in denen es zwei Führungsebenen definiert, wobei die Führungsbenen zueinander parallel sind und wobei in einer der Lagen die durch das Glied (12) definierte Führungsebene gegenüber dem Anschlag (6) versetzt ist, so daß das Glied (12) das Werkstück im Abstand vom Anschlag (6) hält.

2. Einrichtung nach Anspruch 1, dadurch gekennzeichnet, daß die Werkstückführung (12) zwischen den jeweiligen Lagen durch Umkehr ihrer Enden (13, 14) einstellbar ist.

3. Einrichtung nach Anspruch 1 oder 2, dadurch gekennzeichnet, daß die Werkstückführung (12) die Form eines Anschlages (12) hat, der auf der Basis (1) angeordnet ist und zur Einstellung zwischen den abwechselnden Lagen davon entfernbar ist.

4. Einrichtung nach Anspruch 3, dadurch gekennzeichnet, daß der Anschlag (12) durch einen Zapfen (13, 14) in einem Loch (16) der Basis schwenkbar ist.

5. Einrichtung nach Anspruch 4, dadurch gekennzeichnet, daß die jeweiligen Zapfen (13, 14) und die Lochanordnungen (16) für gegenüber liegende Enden des Anschlages (12) vorgesehen sind, um den Anschlag (12) in den abwechselnden Lagen anzuordnen.

6. Einrichtung nach Anspruch 5, dadurch gekennzeichnet, daß die Zapfen (13, 14) an gegenüberliegenden Enden des Anschlages (12) vorgesehen sind, und zwar einer zur Aufnahme in einem Loch (16) in der Basis (11) zur schwenkbaren Anordnung des Anschlages (12) und der andere in einem bogenförmigen Schlitz (17) in der Basis (1) konzentrisch zum Loch (16).

7. Einrichtung nach Anspruch 6, dadurch gekennzeichnet, daß eine Skala der Winkel des Anschlages mit dem Loch (16) als Mittelpunkt auf der Basis markiert ist und daß zusammenwirkende Anzeiger (20, 21) auf dem Anschlag an einer Linie, die die Mittelpunkte der beiden Zapfen (13, 14) verbindet, vorgesehen sind.

8. Einrichtung nach einem der vorhergehenden Ansprüche, dadurch gekennzeichnet, daß die Basis (1) mit zwei verschiedenen Sätzen von Löchern (16) und/oder Schlitzen (17, 18) zur Anordnung der Werkstückführung (12) versehen sind.

9. Einrichtung nach Anspruch 8, wobei die beiden Sätze von Löchern (16) und Schlitzen (17, 18) symmetrisch zur Achse senkrecht auf die Sägeführungsebene angeordnet sind.

## Revendications

1. Dispositif de positionnement destiné à être utilisé pour réaliser un trait de scie dans une pièce à usiner, comprenant une base sur laquelle la pièce à usiner peut être placée, un guide-scie définissant un plan de guidage de la scie, des moyens de guidage de la pièce à usiner fournissant un plan de guidage pour ne face de la pièce à usiner installée sur la base, et une butée située dans une zone proche du plan de guidage de la scie et destinée à s'appliquer contre une extrémité d'une pièce à usiner positionée par les moyens de guidage de la pièce à usiner, caractérisé en ce que les moyens de guidage de la pièce à usiner comprennent un élément (12) pouvant être réglé de façon sélective dans l'une ou l'autre des deux positions, dans lesquelles il définit respectivement deux plans de guidage, lesdits plans de guidage étant parallèles entre eux, et, dans l'une desdites positions, le plan de guidage défini par l'élément (12) est décalé par rapport à la butée (6) de sorte que l'élément (12) positionne la pièce à usiner dans une position écartée de la butée (6).

2. Dispositif selon la revendication 1, caractérisé en ce que le guide (12) de la pièce à usiner est réglable entre les différentes positions au moyen d'un retournement de ses extrémités (13, 14).

3. Dispositif selon la revendication 1 ou 2, caractérisé en ce que le guide (12) de la pièce à usiner se présente sous la forme d'une réglette (12) située sur la base (1) et pouvant an être retiré de manière à être réglé entre les différentes positions.

4. Dispositif selon la revendication 3, caractérisé en ce que la réglette (12) peut pivoter au moyen d'une cheville (13, 14) insérée dans un trou (16) ménagé dans la base.

5. Dispositif selon la revendication 4, caractérisé en ce que les emplacements respectifs de la cheville (13, 14) et du trou (16) sont prévus pour des extrémités opposées de la réglette (12) de manière à positionner cette dernière dans les différentes positions.

6. Dispositif selon la revendication 5, caractérisé en ce que des chevilles (13, 14) sont prévues sur des extrémités opposées de la réglette (12), l'une d'elles devant être logée dans un trou (16) ménagé dans la base (1) afin de permettre un réglage par pivotement de la position de la réglette (12), et l'autre étant située dans une fente courbe (17) ménagée dans la base (1) concentriquement par rapport au trou (16).

7. Dispositif selon la revendication 6, caractérisé en ce qu'une échelle d'angles du guide, centrée sur ledit trou (16), est marquée sur la base et que des moyens coopérant de pointage (20, 21) sont prévus sur la réglette, sur une droite reliant les centres des deux chevilles (13, 14).

8. Dispositif selon l'une quelconque des revendications précédentes, caractérisé en ce que la base (1) comporte deux ensembles différents de trous (16) et/ou de fentes (17, 18) servant à positionner le guide (12) de la pièce à usiner.

9. Dispositif selon la revendication 8, dans lequel les deux ensembles de tous (16) et de fentes (17, 18) sont disposés symétriquement par rapport à l'axe perpendiculaire au plan de guidage de la scie.

Fig.1

Fig.2